# FASCICULE DE BREVET EUROPEEN

(11) **EP 1 574 740 B1**
(45) Date de publication et mention de la délivrance du brevet: **22.11.2006**
(21) Numéro de dépôt: 05290405.9
(22) Date de dépôt: 22.02.2005
(51) Int. Cl.: F16F 1/42, F01N 7/18, B60K 13/04

(54) **Dispositif de liaison antivibratoire**
Schwingungsdämpfendes Verbindungselement
Vibration damping connecting device

(30) Priorité: 12.03.2004 FR 0402612
(43) Date de publication de la demande: 14.09.2005
(73) Titulaire: HUTCHINSON, 75008 Paris (FR)
(72) Inventeur: Molet, Jacques, 28160 Gohory (FR); Porpe, Christophe, 28630 Le Coudray (FR)
(74) Mandataire: Burbaud, Eric

(56) Documents cités:
- EP-A- 0 213 043
- EP-A- 0 762 012
- EP-A- 0 816 734
- FR-A- 2 745 242

## Description

L'invention concerne un dispositif de liaison antivibratoire entre deux éléments vibrant l'un par rapport à l'autre.

Plus précisément l'invention concerne un dispositif de liaison antivibratoire entre un élément de structure vibrant et un élément de structure fixe comprenant :
- un corps en élastomère comportant deux parties de fixation destinées à être fixées respectivement chacune à un élément de structure,
- un anneau limiteur disposé autour du corps en élastomère et adapté pour limiter les débattements relatifs entre les deux parties de fixation, l'anneau limiteur étant fixé au corps en élastomère au moins par clipsage.

Les dispositifs de liaison antivibratoire actuels tels que décrits dans le document EP 0 816734 B1 comportent un dispositif du type décrit précédemment dont l'élément limiteur est fixé de façon amovible.

Dans ce type de dispositif, le limiteur n'est pas fixé à l'élastomère et présente donc le risque de se détacher du corps en élastomère, ce qui entraîne une dégradation en tenue en endurance du corps en élastomère ; voir un déchirement de celui-ci sous un effort de traction dû à un débattement trop important.

La présente invention a notamment pour but de pallier cet inconvénient.

A cet effet, selon l'invention, un dispositif de liaison antivibratoire du genre en question est caractérisé en ce le corps en élastomère comporte une portion surmoulée sur l'anneau limiteur, l'anneau limiteur étant rabattable depuis une position d'extension, dans laquelle il est déployé, vers une position d'utilisation dans laquelle il entoure le corps en élastomère.

Grâce à ces dispositions, l'anneau limiteur est inamovible. Il est maintenu constamment au niveau de la partie surmoulée du corps en élastomère et ne risque pas de se détacher du corps en élastomère. De plus ce type de dispositif est plus facile à réaliser, car il est possible que l'anneau, qui est libre en rotation ou en torsion, n'entoure pas le corps en élastomère pendant l'étape de moulage.

Dans divers modes de réalisation du dispositif selon l'invention, on peut éventuellement avoir recours, en outre, à l'une et ou à l'autre des dispositions suivantes :
- le corps comporte au moins deux pattes entre lesquelles est fixé l'anneau limiteur par clispage,
- la portion surmoulée et les pattes sont disposées à des extrémités opposées,
- la portion surmoulée et les pattes sont disposées perpendiculairement dans un plan délimité par l'anneau,
- les parties de fixation du corps en élastomère sont reliées par deux branches délimitant une ouverture sensiblement centrale, réalisée de manière à absorber les vibrations,
- le corps en élastomère est de forme oblongue s'étendant entre deux extrémités, les parties de fixation étant situées à chaque extrémité,
- les pattes sont en forme de crochet,
- les pattes sont disposées en regard l'une de l'autre et sont disposées de manière décalée,
- le corps en élastomère comporte à l'une de ces extrémités un plot, faisant saillie, dans lequel est surmoulé l'anneau limiteur.
- l'anneau limiteur est souple et est rabattu par torsion ou par rotation.
- l'anneau limiteur est rigide et est rabattu par rotation.

L'invention concerne aussi un procédé de fabrication d'un dispositif anti-vibratoire selon l'invention, qui comprend les étapes suivantes :
- le moulage du corps en élastomère
- le surmoulage de l'anneau dans ledit corps en élastomère, en position dite d'extension dans laquelle l'anneau est déployé dans le prolongement du corps en élastomère, les deux étapes de moulage et de surmoulage étant réalisées simultanément
- une étape dans laquelle l'anneau est rabattu en position d'utilisation dans laquelle il entoure le corps en élastomère.

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 représente une vue en trois dimensions du dispositif antivibratoire selon l'invention en position d'utilisation ;
- la figure 2 représente une vue similaire à celle de la figure 1, dans lequel l'anneau limiteur 22 peut pivoter.

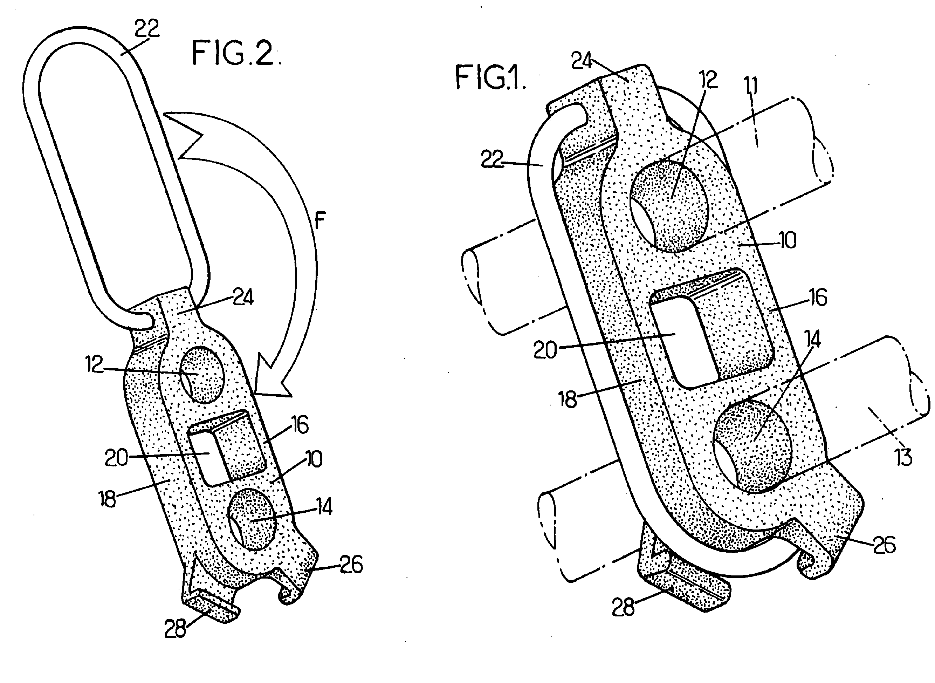

Tel que représenté à la figure 1, le dispositif de liaison antivibratoire comporte un corps en élastomère 10 comprenant deux parties de fixation 12, 14 destinées à être fixées respectivement à un élément de structure vibrant 11 et à un élément de structure fixe 13. Par exemple l'élément de structure vibrant 11 peut être un conduit d'échappement d'un véhicule, et l'élément de structure fixe 13 peut être la caisse du véhicule. Le dispositif de liaison anti-vibratoire permet de relier ces éléments, en amortissant les débattements de l'élément vibrant 11 vers l'élément fixe 13.

Les deux parties de fixation 12, 14 sont formées chacune d'une ouverture circulaire 20 dans lesquelles sont insérés une partie des éléments de structure 11, 13. Ces ouvertures 12, 14 sont disposées à l'opposé l'une de l'autre, selon la direction de débattement dans le corps en élastomère 10, et sont reliées entre elles par l'intermédiaire de deux branches 16, 18, parallèles et s'étendant selon la direction de débattement, et délimitant une ouverture 20 centrale réalisée de manière à absorber les vibrations.

Tel que représenté à la figure 1, le corps en élastomère 10 du dispositif est de forme oblongue, et les parties de fixation 12, 14 se trouvent à chaque extrémité longitudinale dudit corps 10.

Le dispositif comporte aussi un anneau limiteur 22 de forme oblongue entourant le corps en élastomère 10. Il est réalisé dans un matériau rigide tel que des fils de rayonne, du kevlar ®, des câbles ou fils métalliques, ou du plastique rigide.

L'anneau limiteur est maintenu par clipsage à l'une des extrémités longitudinale entre deux pattes 26, 28 disposées sur le corps en élastomère 10. Tel que représenté sur la figure 1, l'anneau limiteur 22 est surmoulé à l'extrémité opposée de celle des pattes dans un plot 24 faisant saillie sur ladite extrémité du corps en élastomère 10. L'anneau limiteur est maintenu autour du corps en élastomère entre le plot 24 et lesdites pattes 26, 28

L'anneau limiteur entoure le corps en élastomère avec un certain jeu pour permettre l'extension du corps en élastomère tout en limitant les débattements relatifs entre les deux éléments de structure.

Il est monté libre en rotation autour d'un axe transversal sensiblement perpendiculaire à l'axe longitudinal, l'axe transversal étant l'axe du cylindre creux formé dans le plot 24, prévu pour l'insertion de l'anneau 22.

Les pattes 26, 28 sont conformées comme des crochets disposées en regard l'une de l'autre, de manière à empêcher le pivotement de l'anneau 22, et donc de le maintenir dans une position d'utilisation, dans laquelle il entoure le corps en élastomère 10. De plus, les pattes 26, 28 sont disposées de manière décalée l'une par rapport à l'autre, et peuvent se déformer, pour permettre un clipsage plus facile de l'anneau limiteur 22 entre ces dernières.

En position d'utilisation, c'est-à-dire en position dans laquelle le dispositif antivibratoire est inséré sur les éléments de structure, l'anneau 22 est maintenu entre deux pattes 26, 28 situées sur le corps en élastomère 10 à l'extrémité opposée de celle du plot 24.

La figure 2 illustre le dispositif, selon l'invention, pour lequel l'anneau limiteur 22 est en position d'extension, dans laquelle l'anneau 22 est situé dans le prolongement du corps en élastomère 10. Il est libre de rotation autour de l'axe transversal défini par le cylindre creux réalisé dans le plot 24. Sur la figure 2, une flèche F indique l'un des mouvements possibles de l'anneau 22 pour que ce dernier vienne s'emboîter entre les deux pattes 26, 28.

Le dispositif de liaison antivibratoire, selon l'invention, est réalisé de la manière suivante : le corps 10 est réalisé par moulage et le limiteur rigide 22 est partiellement surmoulé à l'une des extrémités du corps en élastomère 10, sans être adhérisé pour permettre la rotation de l'anneau 22. Ces étapes sont réalisées simultanément. Pendant ces étapes l'anneau 22 est en position d'extension. Après moulage, ledit anneau 22 limiteur est rabattu et emboîté entre les deux pattes 26, 28 de fixation 12, 14, puis le dispositif antivibratoire est positionné sur les éléments de structure 14, 13 du véhicule entre lesquels on souhaite limiter la transmission des vibrations. Le dispositif est fixé aux éléments de structure grâce aux parties de fixation 12, 14.

Dans un autre mode de réalisation, l'anneau limiteur 22 est souple et est formé d'un matériau moins extensible que le matériau du corps en élastomère 10, de manière à limiter les débattements relatifs entre les deux éléments de structure 11, 13.

L'anneau peut être adhérisé ou non au plot 24 du corps en élastomère 10, de manière à pouvoir effectuer respectivement une torsion ou une rotation lorsqu'il est rabattu de sa position d'extension vers sa position d'utilisation, entre les pattes 26, 28.

Le procédé de réalisation de ce type de dispositif comporte les étapes suivantes : le corps en élastomère 10 est moulé, puis l'anneau limiteur 22 est surmoulé dans ledit corps en élastomère 10 en position d'utilisation ou bien en position d'extension. Les étapes de moulage et de surmoulage sont réalisées simultanément. Dans le cas où le dispositif est moulé avec l'anneau en position d'extension, ce dernier est alors rabattu en position d'utilisation avant sa mise en place sur le véhicule.

Selon une variante de l'invention non représentée, les pattes et la portion surmoulée sont disposées perpendiculairement, dans un plan défini par l'anneau en position d'utilisation.

## Revendications

1. Dispositif de liaison antivibratoire entre un élément de structure vibrant (11) et un élément de structure fixe (13) comprenant :
- un corps en élastomère (10) comportant deux parties de fixation (12, 14) destinées à être fixées respectivement chacune à un élément,
- un anneau (22) limiteur disposé autour du corps en élastomère (10) et adapté pour limiter les débattements relatifs entre les deux éléments de fixation (12, 14), l'anneau limiteur étant fixé au corps en élastomère au moins par clipsage,
**Caractérisé en ce que** le corps en élastomère comporte une portion surmoulée sur l'anneau limiteur (22), l'anneau limiteur étant rabattable depuis une position d'extension dans laquelle il est déployé, vers une position d'utilisation dans laquelle il entoure le corps élastomère.

2. Dispositif selon la revendication 1, **caractérisé en ce que** le corps comporte au moins deux pattes entre lesquelles est fixé l'anneau limiteur par clispage.

3. Dispositif de liaison antivibratoire selon la revendication 2, **caractérisé en ce que** la portion surmoulée et les pattes sont disposées à des extrémités opposées.

4. Dispositif de liaison antivibratoire selon la revendication 2, **caractérisé en ce que** la portion surmoulée et les pattes sont disposées perpendiculairement dans un plan délimité par l'anneau en position d'utilisation.

5. Dispositif de liaison antivibratoire selon l'une quelconque des revendications précédentes, **caractérisé en ce que** les parties de fixation (12, 14) du corps en élastomère (10) sont reliées par deux branches (16, 18) délimitant une ouverture (20) sensiblement centrale, réalisée de manière à absorber les vibrations.

6. Dispositif de liaison antivibratoire selon l'une quelconque des revendications précédentes, **caractérisé en ce que** le corps en élastomère (10) est de forme oblongue, s'étendant entre deux extrémités, les parties de fixation (12, 14) étant situées à chaque extrémité.

7. Dispositif de liaison antivibratoire selon l'une quelconque des revendications 2 à 6, **caractérisé en ce que** les pattes (26, 28) sont en forme de crochet.

8. Dispositif de liaison antivibratoire selon l'une quelconque des revendications 2 à 7, **caractérisé en ce que** les pattes (26, 28) sont disposées en regard l'une de l'autre et sont disposées de manière décalée.

9. Dispositif de liaison antivibratoire selon l'une quelconque des revendications précédentes, **caractérisé en ce que** le corps en élastomère (10) comporte à l'une de ses extrémités un plot 24, faisant saillie, dans lequel est surmoulé l'anneau (22) limiteur.

10. Dispositif de liaison antivibratoire selon l'une des revendications précédentes, **caractérisé en ce que** l'anneau limiteur est souple et est rabattu par torsion ou par rotation.

11. Dispositif de liaison antivibratoire selon l'une des revendications 1 à 9, dans lequel l'anneau limiteur est rigide et est rabattable par rotation.

12. Procédé de fabrication d'un dispositif antivibratoire selon la revendication 1, **caractérisé en ce qu**'il comprend les étapes suivantes :
- le moulage du corps en élastomère (10)
- le surmoulage de l'anneau (22) dans ledit corps en élastomère (10), en position dite ouverte dans laquelle l'anneau est situé dans le prolongement du corps en élastomère, les deux étapes de moulage et de surmoulage étant réalisées simultanément
- une étape dans laquelle l'anneau est rabattu en position d'utilisation dans laquelle il entoure le corps en élastomère.

13. Procédé de fabrication d'un dispositif antivibratoire selon la revendication 10, **caractérisée en ce qu**'il comprend les étapes suivantes :
- moulage du corps en élastomère (10),
- surmoulage de l'anneau limiteur (22) dans ledit corps en élastomère (10) en position d'utilisation, les deux étapes de moulage et de surmoulage étant réalisées simultanément.

## Claims

1. A vibration-damping coupling device for coupling a vibrating structure element (11) to a non-vibrating structure element (13), said device comprising:
- an elastomer body (10) provided with two fastening portions (12, 14) each designed to be fastened respectively to one of said elements; and
- a flexible limiter band (22) disposed around the elastomer body (10) and adapted to limit the relative extension movements between the two fastening elements (12, 14), the limiter band being fastened to the elastomer body at least by clipping;
said device being **characterized in that** the elastomer body is further provided with an overmolded portion that is molded over the limiter band (22), the limiter band being foldable over from an extension position in which it is deployed, to an in-use position in which it surrounds the elastomer body.

2. A device according to claim 1, **characterized in that** the body is provided with at least two catches between which the limiter band is fastened by clipping.

3. A vibration-damping coupling device according to claim 2, **characterized in that** the overmolded portion and the catches are disposed at opposite ends.

4. A vibration-damping coupling device according to claim 2, **characterized in that** the overmolded portion and the catches are disposed perpendicularly in a plane defined by the band in the in-use position.

5. A vibration-damping coupling device according to any preceding claim, **characterized in that** the fastening portions (12, 14) of the elastomer body (10) are interconnected by two branches (16, 18) defining a substantially central opening (20) formed in a manner such as to absorb the vibration.

6. A vibration-damping coupling device according to any preceding claim, **characterized in that** the elastomer body (10) is of oblong shape, extending between two ends, the fastening portions (12, 14) being situated at either end.

7. A vibration-damping coupling device according to any one of claims 2 to 6, **characterized in that** the catches (26, 28) are hook-shaped.

8. A vibration-damping coupling device according to any one of claims 2 to 7, **characterized in that** the catches (26, 28) are disposed facing each other and are disposed in offset manner.

9. A vibration-damping coupling device according to any preceding claim, **characterized in that**, at one of its ends, the elastomer body (10) has a projecting pad (24) which is molded over the limiter band (22).

10. A vibration-damping coupling device according to any preceding claim, **characterized in that** the limiter band is flexible and is folded over by being twisted or pivoted.

11. A vibration-damping coupling device according to any one of claims 1 to 9, in which the limiter band is rigid and can be folded over by being pivoted.

12. A method of manufacturing a vibration-damping device according to claim 1, **characterized in that** it comprises the following steps:
- molding the elastomer body (10);
- overmolding the band (22) in said elastomer body (10), with the band being in an "open" position in which it is situated in alignment with the elastomer body, the two steps of molding and of overmolding being performed simultaneously; and
- a step in which the band is folded over into an in-use position in which it surrounds the elastomer body.

13. A method of manufacturing a vibration-damping device according to claim 10, **characterized in that** it comprises the following steps:
- molding the elastomer body (10);
- overmolding the limiter band (22) in said elastomer body (10), with the band being in the in-use position, the two steps of molding and of overmolding being performed simultaneously.

## Patentansprüche

1. Schwingungsdämpfende Verbindungsvorrichtung zwischen einem schwingenden Aufbauelement (11) und einem feststehenden Aufbauelement (13), die
- einen Elastomerkörper (10) mit zwei Befestigungsteilen (12, 14), die dazu bestimmt sind, jeweils an einem Element befestigt zu werden,
- einen Begrenzungsring (22), der um den Elastomerkörper (10) herum angeordnet ist und geeignet ist, die Ausschläge der beiden Befestigungsteile (12, 14) zueinander zu begrenzen, wobei der Begrenzungsring mittels Schnappverbindung an dem Elastomerkörper befestigt ist, umfasst,
**dadurch gekennzeichnet,**
**dass** der Elastomerkörper einen Abschnitt aufweist, der auf den Begrenzungsring (22) aufgeformt ist, wobei der Begrenzungsring von einer ausgefahrenen Stellung, in der er ausgeklappt ist, in eine Gebrauchsstellung, in der er den Elastomerkörper umgibt, umgeklappt werden kann.

2. Vorrichtung nach Anspruch 1,
**dadurch gekennzeichnet,**
**dass** der Körper mindestens zwei Klauen aufweist, zwischen denen der Begrenzungsring durch Einschnappen befestigt wird.

3. Schwingungsdämpfende Verbindungsvorrichtung nach Anspruch 2,
**dadurch gekennzeichnet,**
**dass** der aufgeformte Abschnitt und die Klauen an entgegengesetzten Enden angeordnet sind.

4. Schwingungsdämpfende Verbindungsvorrichtung nach Anspruch 2,
**dadurch gekennzeichnet,**
**dass** der aufgeformte Abschnitt und die Klauen im rechten Winkel in einer Ebene angeordnet sind, die von dem Ring in Gebrauchsstellung begrenzt wird.

5. Schwingungsdämpfende Verbindungsvorrichtung nach einem der vorherigen Ansprüche,
**dadurch gekennzeichnet,**
**dass** die Befestigungsteile (12, 14) des Elastomerkörpers (10) durch zwei Schenkel (16, 18) miteinander verbunden sind, die eine im Wesentlichen zentrale Öffnung (20) umgrenzen, die dergestalt ausgeführt ist, dass sie die Schwingungen absorbiert.

6. Schwingungsdämpfende Verbindungsvorrichtung nach einem der vorherigen Ansprüche,
**dadurch gekennzeichnet,**
**dass** der Elastomerkörper (10) länglich geformt ist und sich zwischen zwei Enden erstreckt, wobei sich die Befestigungsteile (12, 14) jeweils an einem Ende befinden.

7. Schwingungsdämpfende Verbindungsvorrichtung nach einem der Ansprüche 2 bis 6,
**dadurch gekennzeichnet,**
**dass** die Klauen (26, 28) hakenförmig ausgeführt sind.

8. Schwingungsdämpfende Verbindungsvorrichtung nach einem der Ansprüche 2 bis 7,
**dadurch gekennzeichnet,**
**dass** die Klauen (26, 28) einander gegenüber und zueinander versetzt angeordnet sind.

9. Schwingungsdämpfende Verbindungsvorrichtung nach einem der vorherigen Ansprüche,
**dadurch gekennzeichnet,**
**dass** der Elastomerkörper (10) an einem seiner Enden einen vorstehenden Klotz (24) aufweist, in dem der Begrenzungsring (22) eingeformt ist.

10. Schwingungsdämpfende Verbindungsvorrichtung nach einem der vorherigen Ansprüche,
**dadurch gekennzeichnet,**
**dass** der Begrenzungsring biegsam ist und durch Verdrehen oder Drehen umgeklappt wird.

11. Schwingungsdämpfende Verbindungsvorrichtung nach einem der Ansprüche 1 bis 9,
**dadurch gekennzeichnet,**
**dass** der Begrenzungsring steif ist und durch Drehen umgeklappt werden kann.

12. Verfahren zur Herstellung einer schwingungsdämpfenden Vorrichtung nach Anspruch 1,
**dadurch gekennzeichnet,**
**dass** es die folgenden Schritte umfasst:
- Formen des Elastomerkörpers (10),
- Ein-/Aufformen des Rings (22) in diesem Elastomerkörper (10) in der sogenannten offenen Stellung, bei der sich der Ring in der Verlängerung des Elastomerkörpers befindet, wobei die beiden Verfahrensschritte des Formens und des Aufformens gleichzeitig erfolgen,
- einen Verfahrensschritt, bei dem der Ring in die Gebrauchsstellung umgeklappt wird, in der er den Elastomerkörper umgibt.

13. Verfahren zur Herstellung einer schwingungsdämpfenden Vorrichtung nach Anspruch 10,
**dadurch gekennzeichnet,**
**dass** es die folgenden Schritte umfasst:
- Formen des Elastomerkörpers (10),
- Ein-/Aufformen des Begrenzungsrings (22) in diesem Elastomerkörper (10) in der Gebrauchsstellung, wobei die beiden Verfahrensschritte des Formens und des Aufformens gleichzeitig erfolgen.
